(19) Europäisches Patentamt
European Patent Office
Office européen des brevets

(11) **EP 3 733 910 A1**

(12) **EUROPEAN PATENT APPLICATION**
published in accordance with Art. 153(4) EPC

(43) Date of publication:
**04.11.2020 Bulletin 2020/45**

(51) Int Cl.:
*C22C 38/42* (2006.01)   *C22C 38/44* (2006.01)
*C22C 38/48* (2006.01)   *C22C 38/02* (2006.01)
*C22C 38/04* (2006.01)   *C22C 38/06* (2006.01)
*C22C 38/50* (2006.01)   *C22C 38/46* (2006.01)
*C22C 38/54* (2006.01)   *C22C 38/60* (2006.01)
*C22C 38/52* (2006.01)   *C22C 38/00* (2006.01)
*C21D 9/46* (2006.01)   *C21D 8/02* (2006.01)
*C21D 6/00* (2006.01)

(21) Application number: 19755157.5

(22) Date of filing: 21.01.2019

(86) International application number:
**PCT/JP2019/001665**

(87) International publication number:
**WO 2019/159606 (22.08.2019 Gazette 2019/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 14.02.2018   JP 2018023618

(71) Applicant: JFE Steel Corporation
**Tokyo 100-0011 (JP)**

(72) Inventors:
  • **YANO Takayoshi**
    **Tokyo 100-0011 (JP)**
  • **ICHIKAWA Manami**
    **Tokyo 100-0011 (JP)**

  • **NAKAMURA Tetsuyuki**
    **Tokyo 100-0011 (JP)**
  • **FUKUDA Kunio**
    **Tokyo 100-0011 (JP)**
  • **ISHIKAWA Shin**
    **Tokyo 100-0011 (JP)**
  • **SUGIHARA Reiko**
    **Tokyo 100-0011 (JP)**
  • **YAMAUCHI Katsuhisa**
    **Tokyo 100-0011 (JP)**
  • **MATSUMOTO Hideya**
    **Tokyo 100-0011 (JP)**

(74) Representative: **Hoffmann Eitle**
**Patent- und Rechtsanwälte PartmbB**
**Arabellastraße 30**
**81925 München (DE)**

(54) **FERRITIC STAINLESS STEEL**

(57)    Provided is ferritic stainless steel having good corrosion resistance and good brazability in the case where brazing is performed with a Ni-containing brazing filler metal at a high temperature.

The ferritic stainless steel has a chemical composition containing, by mass%, C: 0.003% to 0.020%, Si: 0.05% to 0.60%, Mn: 0.05% to 0.30%, P: 0.040% or less, S: 0.020% or less, Cr: 17.0% to 22.0%, Ni: 0.20% to 0.80%, Cu: 0.30% to 0.80%, Mo: 0.01% to 0.10%, Al: 0.001% to 0.015%, Nb: 0.25% to 0.60%, and N: 0.020% or less, the balance being Fe and inevitable impurities, in which expression (1) below is satisfied.

$$4Ni - (Si + Mn) \geq 0.00\% \quad \cdots \quad (1) \tag{1}$$

(In expression (1), each of Ni, Si, and Mn denotes a content (mass%) of a corresponding element.)

EP 3 733 910 A1

## Description

Technical Field

The present invention relates to ferritic stainless steel, and in particular, ferritic stainless steel having good brazability in the case where brazing is performed with a Ni-containing brazing filler metal at a high temperature and having excellent corrosion resistance.

Background Art

Nowadays, from the viewpoint of global environment conservation, automobiles are required to have further improved fuel efficiency and enhanced exhaust-purification capability. Therefore, there is a growing trend toward applying an exhaust gas recirculation device such as a heat collector and an EGR (Exhaust Gas Recirculation) cooler to automobiles.

A heat collector is a device to improve fuel efficiency by utilizing the heat of engine-cooling water for room heating or by utilizing the heat of the exhaust gas for heating engine-cooling water and thereby decreasing the warm-up time in engine starting. Generally, the heat collector is installed between a catalyst converter and a muffler. Its heat exchanging part is composed of pipes, plates, fins, side plates, and so forth and inlet and outlet pipes. The exhaust gas is fed into the heat exchanging part through the inlet pipe, the heat of the exhaust gas is transferred to the cooling water through the heat-transfer surfaces of the fins and so forth in the heat exchanging part, and then the exhaust gas is discharged through the outlet pipe. The plates and fins are bonded and assembled to fabricate such a heat exchanging part in the heat collector by using mainly a brazing method with a Ni-containing brazing filler metal.

An EGR cooler is composed of a pipe, through which part of the exhaust gas discharged from the exhaust manifold and so forth is taken in, a heat exchanging part, in which the exhaust gas taken-in is cooled, and a pipe, through which the cooled exhaust gas is returned to the air inlet side of the engine. Specifically, the EGR cooler has a structure in which a heat exchanging part, which has a combination of water flow channels and exhaust gas flow channels, is formed in the path, through which the exhaust gas flows from the exhaust manifold to the air inlet side of the engine. By such a structure, high-temperature exhaust gas on the exhaust side is cooled in the heat exchanging part, and the cooled exhaust gas flows to the air inlet side and decreases the combustion temperature of the engine, therefore, the generation of $NO_x$, which tends to be generated at high temperatures, is suppressed. The heat exchanging part in the EGR cooler is composed by overlapping thin sheets in a fin configuration for the purpose of weight reduction, size reduction, cost reduction, and so forth, and such thin sheets are also bonded and assembled by using mainly a brazing method with a Ni-containing brazing filler metal.

As described above, since the heat exchanging part in the heat collector or the EGR cooler is assembled and jointed by using a brazing method with a Ni-containing brazing filler metal, a material used for such a heat exchanging part is required to have good brazability with a Ni-containing brazing filler metal. Moreover, since small amounts of nitrogen oxides ($NO_x$), sulfur oxides ($SO_x$), and hydrocarbons (HC) are contained in the exhaust gas and they are condensed in the heat exchanging part, strongly corrosive acidic condensed water is generated. Therefore, the material used for such a heat exchanging part is also required to have corrosion resistance at room temperature. In particular, since it becomes high temperature during brazing process, it is necessary to achieve good corrosion resistance by preventing so-called sensitization, in which Cr at grain boundaries preferentially reacts with C and N and thereby a Cr-depleted zone is formed.

For the reasons described above, as a material used for the heat exchanging part in the heat collector or in the EGR cooler, austenitic stainless steels such as SUS316L and SUS304L, in which the carbon content is small so that sensitization is less likely to occur, have usually been used. However, in the case of austenitic stainless steel, since a large amount of Ni is contained, there is a problem of an increase in cost, and because of an increase in thermal expansion, there is a problem of a deterioration in fatigue resistance and high-temperature fatigue resistance in a usage environment in which parts, such as parts around an exhaust, are subjected to severe vibration with restraining forces at a high temperature.

Therefore, it has been considered to use steel other than austenitic stainless steel for the heat exchanging part in the heat collector or the EGR cooler.

For example, Patent Literature 1 discloses ferritic stainless steel which is usable as a material for an EGR cooler and in which an intended brazability is achieved by adding constituents such as Cr, Cu, Al, and Ti so that a certain relational expression is satisfied and by decreasing the contents of Al and Ti.

In addition, Patent Literature 2 discloses ferritic stainless steel which is usable as a material for the parts of an EGR cooler having a structure formed by using a brazing method with a Ni-containing brazing filler metal and in which an intended brazability is achieved by decreasing the contents of Al, Ti, and Zr.

Moreover, Patent Literature 3 discloses ferritic stainless steel which is a ferritic stainless steel material for brazing and in which an intended brazability is achieved by decreasing the Ti content.

Citation List

Patent Literature

PTL 1: Japanese Unexamined Patent Application Publication No. 2010-121208
PTL 2: Japanese Unexamined Patent Application Publication No. 2009-174040
PTL 3: Japanese Unexamined Patent Application Publication No. 2010-285683

Summary of Invention

Technical Problem

However, in the techniques described in Patent Literature 1 through Patent Literature 3, there is a case of insufficient brazability depending on, for example, a kind of brazing filler metal to be used or brazing conditions. In particular, in the techniques according to the related art, it may be said that good corrosion resistance and sufficient brazability with a Ni-containing brazing filler metal at a high temperature, which are required as described above, have not yet been achieved.

The present invention has been developed in view of the situation described above, and an object of the present invention is to provide ferritic stainless steel having good corrosion resistance and good brazability in the case where brazing is performed with a Ni-containing brazing filler metal at a high temperature.

In the present description, the expression "good brazability" denotes that, at the time when a Ni-containing brazing filler metal (JIS: BNi-5) have been applied to the surface of a steel sheet, then the steel sheet is heated in a nitrogen carrier gas atmosphere at a temperature of 1170°C under a pressure of 1 Torr for 10 minutes, and the heated steel sheet is cooled to room temperature, the ratio (spread ratio of a brazing filler metal) of the circle-equivalent diameter of the brazing filler metal after heating to the circle-equivalent diameter of the brazing filler metal before heating is 150% or more.

In addition, the expression "good corrosion resistance" denotes that a pitting potential Vc'100 is 150 mV (vs SCE) or more, where the pitting potential Vc'100 is determined in such a way that, a test piece of 20 mm square is taken from a portion of the steel sheet having subjected to the brazing treatment with a Ni-containing brazing filler metal as described above and the brazing filler metal does not adhering to the portion, the test piece of 20mm square is covered with a sealing material with a measurement surface of 11 mm square being left uncovered, the covered test piece is immersed in a 3.5% NaCl aqueous solution having a temperature of 30°C, and then the pitting potential Vc'100 is measured in accordance with JIS G 0577 with the exception of the concentration of the NaCl aqueous solution. Solution to Problem

The present inventors diligently conducted investigations regarding the relationship between the chemical composition of stainless steel and brazability in the case where brazing is performed with a Ni-containing brazing filler metal at a high temperature.

As a result, it was found that, by decreasing the Al content in stainless steel, by containing an appropriate amount of Ni in the stainless steel, and by appropriately decreasing the Si content and the Mn content in relation to the Ni content, there is an improvement in wettability with a Ni-containing brazing filler metal. The present invention has been completed on the basis of the findings described above and additional investigations.

That is, the subjective matter of the present invention is as follows.

[1] Ferritic stainless steel having a chemical composition containing, by mass%,
C: 0.003% to 0.020%,
Si: 0.05% to 0.60%,
Mn: 0.05% to 0.30%,
P: 0.040% or less,
S: 0.020% or less,
Cr: 17.0% to 22.0%,
Ni: 0.20% to 0.80%,
Cu: 0.30% to 0.80%,
Mo: 0.01% to 0.10%,
Al: 0.001% to 0.015%,

Nb: 0.25% to 0.60%, and
N: 0.020% or less,
the balance being Fe and inevitable impurities, in which expression (1) below is satisfied.

$$4Ni - (Si + Mn) \geq 0.00\% \quad \cdots \quad (1)$$

(In expression (1), each of Ni, Si, and Mn denotes a content (mass%) of a corresponding element.)
[2] The ferritic stainless steel according to item [1] above, in which the chemical composition further contains, by mass%, one or both selected from
Co: 0.01% to 0.50%, and
W: 0.01% to 0.50%.
[3] The ferritic stainless steel according to item [1] or [2] above, in which the chemical composition further contains, by mass%, one, two, or more selected from
Ti: 0.01% to 0.10%,
V: 0.01% to 0.20%,
Zr: 0.01% to 0.10%,
Mg: 0.0005% to 0.0050%,
Ca: 0.0003% to 0.0030%,
B: 0.0003% to 0.0030%,
REM (rare earth metal): 0.001% to 0.100%,
Sn: 0.001% to 0.100%, and
Sb: 0.001% to 0.100%.
[4] The ferritic stainless steel according to any one of items [1] to [3] above, the steel being suitable for a heat collector or an exhaust gas recirculation cooler having at least one joint part formed by using a brazing method.

Advantageous Effects of Invention

According to the present invention, it is possible to obtain ferritic stainless steel having good corrosion resistance and good brazability in the case where brazing is performed with a Ni-containing brazing filler metal at a high temperature.

Description of Embodiments

Hereafter, the present invention will be described specifically.

First, the reasons for the limitations on the chemical composition of the steel within the above described range in the present invention will be described. Here, the content of any of the elements in the chemical composition of the steel is expressed in units of "mass%", and "mass%" is simply denoted by "%", unless otherwise noted.

C: 0.003% to 0.020%

An increase in the C content improves strength and a decrease in the C content improves workability. Here, it is necessary that the C content be 0.003% or more to achieve sufficient strength. However, when the C content is more than 0.020%, workability deteriorates markedly, and corrosion resistance tends to deteriorate due to sensitization, which is caused by precipitation of Cr carbides at grain boundaries. Therefore, the C content is set to be 0.003% to 0.020%. The C content is preferably 0.004% or more. In addition, the C content is preferably 0.015% or less, and more preferably 0.010% or less.

Si: 0.05% to 0.60%

Si is an useful element as a deoxidizing agent. This effect is obtained when the Si content is 0.05% or more. However, when the Si content is more than 0.60%, brazability deteriorates due to the formation of Si-concentrating compounds such as Si oxides and Si nitrides on the surface of a steel sheet during a heat treatment for brazing. Therefore, the Si content is set to be 0.05% to 0.60%. The Si content is preferably 0.20% or more, more preferably 0.30% or more, and further preferably 0.40% or more. In addition, the Si content is preferably 0.55% or less, and more preferably 0.50% or less.

Mn: 0.05% to 0.30%

Mn has the effect of deoxidizing, and this effect is obtained when the Mn content is 0.05% or more. However, when the Mn content increases, brazability deteriorates due to the formation of Mn-concentrating compounds on the surface of a steel sheet by a heat treatment for brazing as in the case of Si. By controlling the Mn content to be 0.30% or less, it is possible to further improve brazability. Therefore, the Mn content is set to be 0.05% to 0.30%. The Mn content is preferably 0.10% or more, and more preferably 0.15% or more. In addition, the Mn content is preferably 0.25% or less, and more preferably 0.20% or less.

P: 0.040% or less

P is an element which is inevitably contained in steel, and, when the P content is excessively large, weldability deteriorates, and intergranular corrosion tends to occur. Such tendencies become marked when the P content is more than 0.040%. Therefore, the P content is set to be 0.040% or less. The P content is preferably 0.030% or less.

S: 0.020% or less

S is an element which is inevitably contained in steel, and, when the S content is more than 0.020%, since the precipitation of MnS is promoted, corrosion resistance deteriorates. Therefore, the S content is set to be 0.020% or less. The S content is preferably 0.010% or less.

Cr: 17.0% to 22.0%

Cr is an important element for ensuring the corrosion resistance of stainless steel. When the Cr content is less than 17.0%, it is not possible to achieve sufficient corrosion resistance after a brazing treatment has been performed. However, when the Cr content increases, brazability deteriorates due to the formation of a Cr oxide film on the surface of a steel sheet during brazing with a Ni-containing brazing filler metal at a high temperature. By controlling the Cr content to be 22.0% or less, it is possible to further improve brazability. Therefore, the Cr content is set to be 17.0% to 22.0%. The Cr content is preferably 18.5% or more, and more preferably 19.0% or more. In addition, the Cr content is preferably 21.0% or less, and more preferably less than 20.0%

Ni: 0.20% to 0.80%

Ni is one of the important elements in the present invention. When the Ni content is 0.20% or more, brazability with a Ni-containing brazing filler metal is improved. Although the mechanism by which containing Ni improves brazability with a Ni-containing brazing filler metal is not clear, it is considered that, when an appropriate amount of Ni is contained in the base metal, wettability is improved by the interaction between Ni in the base metal and Ni in the brazing filler metal. However, when the Ni content is more than 0.80%, stress corrosion cracking susceptibility increases. Therefore, the Ni content is set to be 0.20% to 0.80%. The Ni content is preferably 0.25% or more, and more preferably 0.30% or more. In addition, the Ni content is preferably 0.70% or less, more preferably 0.60% or less, and further preferably 0.50% or less.

Cu: 0.30% to 0.80%

Cu is an element which improves corrosion resistance. This effect is obtained when the Cu content is 0.30% or more. However, when the Cu content is more than 0.80%, hot workability deteriorates. Therefore, the Cu content is set to be 0.30% to 0.80%. The Cu content is preferably 0.35% or more. In addition, the Cu content is preferably 0.60% or less, and more preferably 0.50% or less.

Mo: 0.01% to 0.10%

Mo improves corrosion resistance by stabilizing the passivation film of stainless steel. This effect is obtained when the Mo content is 0.01% or more. However, since Mo is an expensive element, Mo causes an increase in cost. Moreover, when the Mo content is more than 0.10%, surface defects becomes easy to occur when hot rolling is performed. Therefore, the Mo content is set to be 0.01% to 0.10%. The Mo content is preferably 0.05% or less.

Al: 0.001% to 0.015%

Al is an effective element for deoxidation, and this effect is obtained when the Al content is 0.001% or more. However, when the Al content is more than 0.015%, wettability and adhesiveness of a brazing filler metal deteriorate due to the formation of Al-concentrating compounds such as Al oxides and Al nitrides on the surface of steel during a brazing treatment, and it is difficult to perform brazing. Therefore, the Al content is set to be 0.001% to 0.015%. The Al content is preferably 0.010% or less, and more preferably 0.006% or less.

Nb: 0.25% to 0.60%

Nb prevents a deterioration in corrosion resistance (sensitization), which is cause by the precipitation of Cr carbonitrides, by combining with C and N. This effect is obtained when the Nb content is 0.25% or more. On the other hand, when the Nb content is more than 0.60%, weld cracking becomes easy to occur in a weld zone. Therefore, the Nb content is set to be 0.25% to 0.60%. The Nb content is preferably 0.30% or more, and more preferably 0.33% or more. In addition, the Nb content is preferably 0.50% or less, and more preferably 0.45% or less.

N: 0.020% or less

When the N content is more than 0.020%, corrosion resistance and workability deteriorate markedly. Therefore, the N content is set to be 0.020% or less. The N content is preferably 0.015% or less, and more preferably 0.010% or less. Here, although there is no particular limitation on the lower limit of the N content, an excessive decrease in N content results in increased manufacturing costs. Therefore, the N content is preferably 0.005% or more.

$$4Ni - (Si + Mn) \geq 0.00\% \quad \cdots (1)$$

In expression (1), each of Ni, Si, and Mn denotes the content (mass%) of the corresponding element.
In the present invention, each of the contents of Ni, Si, and Mn is controlled to have a corresponding predetermined value to improve brazability. Moreover, the present inventors diligently conducted investigations and, as a result, found that it is not possible to achieve the desired brazability in the case where (4Ni - (Si + Mn)) (a value by mass% obtained by subtracting the Si content and the Mn content from the Ni content multiplied by 4) is less than 0.00%. Therefore, in the present invention, (4Ni - (Si + Mn)) is controlled to be 0.00% or more, and preferably 0.25% or more in addition to controlling each of the Ni content, the Si content and the Mn content within the respective range described above. In particular, by controlling the Cr content to be less than 20.0%, by controlling the Al content to be 0.006% or less, and by controlling (4Ni - (Si + Mn)) to be 0.25% or more, it is possible to achieve a further improved brazability.
As above, the basic components (essential components) of the ferritic stainless steel according to the present invention have been described. The remainder of the chemical composition according to the present invention which is other than the components described above is Fe and inevitable impurities.
In addition, in the present invention, the elements described below may be appropriately contained as needed.

Co: 0.01% to 0.50%

Co is an element which improves corrosion resistance. This effect is obtained when the Co content is 0.01% or more. However, when the Co content is more than 0.50%, workability may deteriorate in some cases. Therefore, when Co is contained, the Co content is set to be 0.01% to 0.50%. The Co content is preferably 0.05% or more. In addition, the Co content is preferably 0.30% or less.

W: 0.01% to 0.50%

W is an element which improves corrosion resistance. This effect is obtained when the W content is 0.01% or more. However, when the W content is more than 0.50%, workability may deteriorate in some cases. Therefore, when W is contained, the W content is set to be 0.01% to 0.50%. The W content is preferably 0.05% or more. In addition, the W content is preferably 0.20% or less.

Ti: 0.01% to 0.10%

Ti is effective for preventing sensitization by combining with C and N in steel. This effect is obtained when the Ti content is 0.01% or more. On the other hand, Ti is an active element in combining with oxygen, and when the Ti content is more than 0.10%, brazability deteriorates due to the formation of Ti oxide film on the surface of steel during brazing treatment. Therefore, when Ti is contained, the Ti content is set to be 0.01% to 0.10%. The Ti content is preferably 0.05% or less, and more preferably 0.03% or less.

V: 0.01% to 0.20%

V, like Ti, prevents sensitization by combining with C and N in steel. In addition, V is effective for forming a N-concentrated layer by combining with nitrogen. These effects are obtained when the V content is 0.01% or more. On the other hand, when the V content is more than 0.20%, workability may deteriorate in some cases. Therefore, when V is contained, the V content is set to be 0.01% to 0.20%. The V content is preferably 0.15% or less, and more preferably 0.10% or less.

Zr: 0.01% to 0.10%

Zr is, like Ti and Nb, an element which prevents sensitization by combining with C and N in steel. This effect is obtained when the Zr content is 0.01% or more. On the other hand, when the Zr content is more than 0.10%, workability may deteriorate in some cases. Therefore, when Zr is contained, the Zr content is set to be 0.01% to 0.10%. The Zr content is preferably 0.03% or more. In addition, the Zr content is preferably 0.05% or less.

Mg: 0.0005% to 0.0050%

Mg has the effect of a deoxidizing agent. This effect is obtained when the Mg content is 0.0005% or more. However, when the Mg content is more than 0.0050%, productivity may decrease due to deterioration in the toughness of steel. Therefore, when Mg is contained, the Mg content is set to be 0.0005% to 0.0050%. The Mg content is preferably 0.0020% or less.

Ca: 0.0003% to 0.0030%

Ca improves weldability by increasing the weld penetration of a weld zone. This effect is obtained when the Ca content is 0.0003% or more. However, when the Ca content is more than 0.0030%, since Ca combines with S to form CaS, corrosion resistance may deteriorate in some cases. Therefore, when Ca is contained, the Ca content is set to be 0.0003% to 0.0030%. The Ca content is preferably 0.0005% or more. In addition, the Ca content is preferably 0.0020% or less.

B: 0.0003% to 0.0030%

B is an element which improves secondary working embrittlement. This effect is obtained when the B content is 0.0003% or more. However, when the B content is more than 0.0030%, ductility may deteriorate in some cases due to solid solution strengthening. Therefore, when B is contained, the B content is set to be 0.0003% to 0.0030%.

REM (rare earth metal): 0.001% to 0.100%

REM (rare earth metal: element having an atomic number of 57 to 71 such as La, Ce, or Nd) is an element which is effective for deoxidization. This effect is obtained when the REM content is 0.001% or more. However, when the REM content is more than 0.100%, hot workability may deteriorate in some cases. Therefore, when REM is contained, the REM content is set to be 0.001% to 0.100%. The REM content is preferably 0.010% or more. In addition, the REM content is preferably 0.050% or less.

Sn: 0.001% to 0.100%

Sn is an effective element for suppressing surface roughening caused by work. This effect is obtained when the Sn content is 0.001% or more. However, when the Sn content is more than 0.100%, hot workability may deteriorate in some cases. Therefore, when Sn is contained, the Sn content is set to be 0.001% to 0.100%. The Sn content is preferably 0.050% or less.

Sb: 0.001% to 0.100%

Sb is, like Sn, an effective element for suppressing surface roughening caused by work. This effect is obtained when the Sb content is 0.001% or more. However, when the Sb content is more than 0.100%, workability may deteriorate in some cases. Therefore, when Sb is contained, the Sb content is set to be 0.001% to 0.100%. The Sb content is preferably 0.050% or less.

Hereafter, a preferable method for manufacturing the ferritic stainless steel according to the present invention will be described.

There is no particular limitation on the method used for manufacturing the ferritic stainless steel according to the present invention. For example, it is possible to manufacture ferritic stainless steel (ferritic stainless steel sheet) having the chemical composition described above by performing hot rolling on a steel slab having the chemical composition described above to obtain a hot-rolled steel sheet, by performing hot-rolled-sheet annealing on the hot-rolled steel sheet as needed, then by performing cold rolling on the resultant hot-rolled steel sheet to obtain a cold-rolled steel sheet having a desired thickness, and by performing cold-rolled-sheet annealing on the cold-rolled steel sheet as needed.

Here, there is no particular limitation on the conditions applied for hot rolling, hot-rolled-sheet annealing, cold rolling, cold-rolled-sheet annealing, and so forth, and commonly used conditions may be applied.

In a steel-making process of preparing molten steel, it is preferable that steel, which has been melted by using, for example, a converter or an electric furnace, be subjected to secondary refining, in which, for example, a VOD method is used, to obtain steel containing the essential elements and the elements contained as needed described above. Although the prepared molten steel may be made into steel by using a known method, it is preferable that a continuous casting method be used from the viewpoint of productivity and quality. Subsequently, the steel is heated preferably to a temperature of 1050°C to 1250°C and subjected to hot rolling to be made into a hot-rolled steel sheet having a desired thickness. It is needless to say that the steel may be subjected to hot work to be made into a product other than a steel sheet. It is preferable that the hot-rolled steel sheet described above be subjected to continuous annealing at a temperature of 900°C to 1150°C as needed and subjected to, for example, pickling for descaling to be made into a hot-rolled product. Here, before pickling is performed, shot blasting may be performed for descaling as needed.

Moreover, the above-described hot-rolled product (such as a hot-rolled and annealed steel sheet) may be subjected to a process such as a cold rolling to be made into a cold-rolled product. In this case, although cold rolling may be performed only one time, cold rolling may be performed two or more times with an annealing process interposed between periods in which cold rolling is performed, from the viewpoint of productivity and required quality. When cold rolling is performed one or two or more times, it is preferable that the total rolling reduction ratio be 60% or more or more preferably 70% or more. Subsequently, it is preferable that the cold-rolled steel sheet be subjected to continuous annealing (finish annealing) preferably at a temperature of 900°C to 1150°C or more preferably at a temperature of 950°C to 1150°C and subjected to pickling so as to be made into a cold-rolled product. Here, bright annealing may be performed instead of continuous annealing to omit pickling. Moreover, for example, skin pass rolling may be performed after finish annealing has been performed to adjust the shape, surface roughness, or material properties of the steel sheet depending on intended use.

The above-described ferritic stainless steel according to the present invention can suitably be used for an heat collector or an exhaust gas recirculation cooler having at least one joint part formed by using a brazing method, and in particular, used as a material for a heat exchanging part in the heat collector or the exhaust gas recirculation color.

EXAMPLES

Hot-rolled steel sheets having a thickness of 4.0 mm were manufactured by preparing, by using a vacuum melting furnace, steels having the chemical compositions given in Table 1 and by performing hot rolling after heating had been performed at a temperature of 1100°C to 1200°C for one hour. The hot-rolled steel sheets were subjected to hot-rolled-sheet annealing at a temperature of 950°C to 1100°C followed by descaling and cold rolling to have a thickness of 1.0 mm. Cold-rolled and annealed steel sheets obtained by performing finish annealing at a temperature of 950°C to 1100°C, the surfaces of which were polished by using #600 emery paper and degreased by using acetone, were subjected to tests.

These cold-rolled and annealed steel sheets were subjected to brazing with a Ni-containing brazing filler metal as described below and subjected to (1) brazability evaluation, and the cold-rolled and annealed steel sheets which had been subjected to a brazing treatment were subjected to (2) corrosion resistance evaluation.

(1) Brazability evaluation

After having taken a test piece having a width of 50 mm and a length of 50 mm from the obtained cold-rolled and annealed steel sheet, applied a Ni-containing brazing filler metal (JIS: BNi-5) having a diameter of 10 mm and a thickness of 1 mm to the surface of the test piece, heated the test piece in a nitrogen carrier gas atmosphere at a temperature of 1170°C under a pressure of 1 Torr for 10 minutes, and cooled the heated test piece to room temperature, the circle-equivalent diameter of the brazing filler metal on the surface of the test piece was determined.

spread ratio of the brazing filler metal after the heating to the brazing filler metal before the heating =

((circle-equivalent diameter of the brazing filler metal

after the test)/(circle-equivalent diameter of the brazing filler metal before the test)) × 100 (%)

⊙ (satisfactory, particularly excellent): 160% or more
○ (satisfactory): 150% or more and less than 160%
× (unsatisfactory): less than 150%

(2) Corrosion resistance evaluation

A test piece of the cold-rolled and annealed steel sheet which had been subjected to a brazing treatment was used. A test piece of 20 mm square was taken from a portion of the test piece of the cold-rolled and annealed steel sheet, the brazing filler metal not adhering to the portion, and the test piece of 20mm square was covered with a sealing material with a measurement surface of 11 mm square being left uncovered. Subsequently, the covered test piece was immersed in a 3.5% NaCl aqueous solution having a temperature of 30°C to perform a corrosion resistance test in accordance with JIS G 0577 with exception of the concentration of the NaCl aqueous solution. The determined pitting potential Vc'100 is given in Table 2. Here, in consideration of the conditions under which a heat exchanger in a heat collector or an EGR cooler is used, it is possible to judge a case where the pitting potential Vc'100 is 150 mV (vs SCE) or more as a case of excellent corrosion resistance.

○ (satisfactory): 150 mV (vs SCE) or more
× (unsatisfactory): less than 150 mV (vs SCE)

[Table 1]

Chemical Composition (mass%)

| Steel Code | C | Si | Mn | P | S | Cr | Ni | Cu | Mo | Al | Nb | N | 4Ni-(Si+Mn) | Other | Note |
|---|---|---|---|---|---|---|---|---|---|---|---|---|---|---|---|
| A1 | 0.011 | 0.54 | 0.14 | 0.029 | 0.002 | 19.3 | 0.24 | 0.64 | 0.06 | 0.004 | 0.49 | 0.012 | 0.28 | | Example Steel |
| A2 | 0.009 | 0.49 | 0.11 | 0.031 | 0.005 | 19.4 | 0.25 | 0.48 | 0.08 | 0.005 | 0.46 | 0.010 | 0.40 | | Example Steel |
| A3 | 0.010 | 0.09 | 0.13 | 0.031 | 0.005 | 19.1 | 0.21 | 0.44 | 0.03 | 0.014 | 0.44 | 0.013 | 0.62 | | Example Steel |
| A4 | 0.006 | 0.48 | 0.17 | 0.030 | 0.003 | 17.2 | 0.26 | 0.45 | 0.05 | 0.003 | 0.27 | 0.007 | 0.39 | | Example Steel |
| A5 | 0.011 | 0.48 | 0.15 | 0.032 | 0.005 | 19.2 | 0.25 | 0.43 | 0.05 | 0.003 | 0.45 | 0.011 | 0.37 | V: 0.02 | Example Steel |
| A6 | 0.010 | 0.58 | 0.16 | 0.033 | 0.007 | 19.2 | 0.24 | 0.48 | 0.01 | 0.002 | 0.44 | 0.009 | 0.22 | W: 0.04 | Example Steel |
| A7 | 0.011 | 0.48 | 0.27 | 0.030 | 0.006 | 19.2 | 0.25 | 0.36 | 0.02 | 0.003 | 0.45 | 0.010 | 0.25 | | Example Steel |
| A8 | 0.012 | 0.46 | 0.22 | 0.028 | 0.004 | 19.8 | 0.74 | 0.42 | 0.01 | 0.002 | 0.45 | 0.011 | 2.28 | Co: 0.13, V: 0.03, B: 0.0005, Sn: 0.01 | Example Steel |
| A9 | 0.013 | 0.47 | 0.08 | 0.032 | 0.005 | 19.4 | 0.31 | 0.73 | 0.06 | 0.003 | 0.41 | 0.012 | 0.69 | | Example Steel |
| A10 | 0.012 | 0.43 | 0.25 | 0.027 | 0.006 | 19.6 | 0.43 | 0.45 | 0.09 | 0.008 | 0.44 | 0.011 | 1.04 | Ti: 0.02 | Example Steel |
| A11 | 0.015 | 0.46 | 0.17 | 0.029 | 0.005 | 21.6 | 0.25 | 0.42 | 0.02 | 0.006 | 0.58 | 0.012 | 0.37 | | Example Steel |
| A12 | 0.011 | 0.55 | 0.24 | 0.029 | 0.005 | 19.9 | 0.22 | 0.45 | 0.05 | 0.003 | 0.41 | 0.010 | 0.09 | | Example Steel |
| A13 | 0.010 | 0.48 | 0.21 | 0.033 | 0.005 | 19.8 | 0.21 | 0.43 | 0.03 | 0.002 | 0.44 | 0.007 | 0.15 | Co: 0.08 | Example Steel |
| A14 | 0.012 | 0.46 | 0.17 | 0.032 | 0.005 | 19.4 | 0.24 | 0.44 | 0.03 | 0.005 | 0.45 | 0.011 | 0.33 | W: 0.09, V: 0.03 | Example Steel |
| A15 | 0.011 | 0.46 | 0.14 | 0.025 | 0.005 | 19.5 | 0.23 | 0.42 | 0.02 | 0.003 | 0.46 | 0.012 | 0.32 | Co: 0.03, Ti: 0.02, V: 0.02 | Example Steel |
| A16 | 0.010 | 0.44 | 0.18 | 0.024 | 0.006 | 19.4 | 0.26 | 0.41 | 0.01 | 0.009 | 0.42 | 0.009 | 0.42 | W: 0.05, Ca: 0.0006, Zr: 0.04, REM: 0.02 | Example Steel |
| A17 | 0.013 | 0.48 | 0.14 | 0.026 | 0.005 | 19.3 | 0.24 | 0.41 | 0.07 | 0.003 | 0.43 | 0.010 | 0.34 | Co: 0.05, V: 0.02, Zr: 0.02, Mg: 0.0007 | Example Steel |
| A18 | 0.013 | 0.47 | 0.16 | 0.027 | 0.004 | 19.3 | 0.21 | 0.43 | 0.03 | 0.002 | 0.43 | 0.009 | 0.21 | V: 0.04, Ca: 0.0005, B: 0.0006 | Example Steel |

(continued)

| Steel Code | Chemical Composition (mass%) | | | | | | | | | | | | | | Note |
|---|---|---|---|---|---|---|---|---|---|---|---|---|---|---|---|
| | C | Si | Mn | P | S | Cr | Ni | Cu | Mo | Al | Nb | N | 4Ni-(Si+Mn) | Other | |
| A19 | 0.012 | 0.46 | 0.17 | 0.030 | 0.005 | 19.2 | 0.33 | 0.47 | 0.02 | 0.003 | 0.44 | 0.012 | 0.69 | Ti: 0.02, Zr: 0.03, Sn: 0.003, Sb: 0.02 | Example Steel |
| A20 | 0.009 | 0.49 | 0.18 | 0.028 | 0.003 | 19.4 | 0.36 | 0.48 | 0.02 | 0.003 | 0.43 | 0.008 | 0.77 | | Example Steel |
| A21 | 0.010 | 0.46 | 0.15 | 0.031 | 0.004 | 19.1 | 0.33 | 0.42 | 0.04 | 0.002 | 0.42 | 0.009 | 0.71 | Mg 0.0006, REM: 0.01 | Example Steel |
| B1 | 0.008 | _0.64_ | 0.23 | 0.029 | 0.005 | 19.1 | 0.31 | 0.46 | 0.05 | 0.004 | 0.46 | 0.011 | 0.37 | | Comparative Steel |
| B2 | 0.010 | 0.45 | _0.35_ | 0.027 | 0.006 | 19.5 | 0.28 | 0.43 | 0.06 | 0.003 | 0.45 | 0.008 | 0.32 | | Comparative Steel |
| B3 | 0.011 | 0.44 | 0.13 | 0.032 | 0.007 | 19.3 | _0.16_ | 0.42 | 0.03 | 0.002 | 0.44 | 0.007 | 0.07 | | Comparative Steel |
| B4 | 0.012 | 0.40 | 0.17 | 0.031 | 0.006 | 19.7 | 0.29 | 0.44 | 0.06 | _0.018_ | 0.43 | 0.013 | 0.59 | | Comparative Steel |
| B5 | 0.008 | 0.48 | 0.23 | 0.027 | 0.005 | 19.6 | 0.32 | 0.43 | 0.05 | 0.005 | 0.44 | 0.011 | 0.57 | _Ti: 0.15_ | Comparative Steel |
| B6 | 0.013 | 0.58 | 0.28 | 0.028 | 0.005 | 19.3 | 0.20 | 0.41 | 0.04 | 0.004 | 0.45 | 0.012 | _-0.06_ | | Comparative Steel |
| B7 | 0.012 | 0.47 | 0.16 | 0.034 | 0.006 | _16.3_ | 0.34 | 0.42 | 0.03 | 0.003 | 0.45 | 0.009 | 0.73 | | Comparative Steel |
| B8 | 0.011 | 0.52 | 0.12 | 0.033 | 0.003 | _23.1_ | 0.23 | 0.43 | 0.05 | 0.005 | 0.46 | 0.010 | 0.28 | | Comparative Steel |
| B9 | 0.013 | 0.46 | 0.14 | 0.033 | 0.005 | 19.2 | 0.29 | _0.22_ | 0.04 | 0.002 | 0.44 | 0.010 | 0.56 | | Comparative Steel |

• The remainder which is other than the components described above is Fe and inevitable impurities.
• The underlined parts indicates being out of the range of the present invention.

[Table 2]

| No. | Steel Code | Evaluation Result | | Note |
|---|---|---|---|---|
| | | Brazability | Corrosion Resistance | |
| 1 | A1 | ⊙ | ○ | Example |
| 2 | A2 | ⊙ | ○ | Example |
| 3 | A3 | ○ | ○ | Example |
| 4 | A4 | ⊙ | ○ | Example |
| 5 | A5 | ⊙ | ○ | Example |
| 6 | A6 | ○ | ○ | Example |
| 7 | A7 | ⊙ | ○ | Example |
| 8 | A8 | ⊙ | ○ | Example |
| 9 | A9 | ⊙ | ○ | Example |
| 10 | A10 | ○ | ○ | Example |
| 11 | A11 | ○ | ○ | Example |
| 12 | A12 | ○ | ○ | Example |
| 13 | A13 | ○ | ○ | Example |
| 14 | A14 | ⊙ | ○ | Example |
| 15 | A15 | ⊙ | ○ | Example |
| 16 | A16 | ○ | ○ | Example |
| 17 | A17 | ⊙ | ○ | Example |
| 18 | A18 | ○ | ○ | Example |
| 19 | A19 | ⊙ | ○ | Example |
| 20 | B1 | × | ○ | Comparative Example |
| 21 | B2 | × | ○ | Comparative Example |
| 22 | B3 | × | ○ | Comparative Example |
| 23 | B4 | × | ○ | Comparative Example |
| 24 | B5 | × | ○ | Comparative Example |
| 25 | B6 | × | ○ | Comparative Example |
| 26 | B7 | ⊙ | × | Comparative Example |
| 27 | B8 | × | ○ | Comparative Example |
| 28 | B9 | ⊙ | × | Comparative Example |
| 29 | A20 | ⊙ | ○ | Example |
| 30 | A21 | ⊙ | ○ | Example |

As indicated in Table 2, it is clarified that, in the examples of the present invention, that is, Nos. 1 through 19, 29, and 30, brazability and corrosion resistance were good. In particular, in Nos. 1, 2, 4, 5, 7 through 9, 14, 15, 17, 19, 29, and 30 where the Cr content was less than 20.0%, the Al content was 0.006% or less, and the expression (4Ni - (Si + Mn) ≥ 0.25%) was satisfied, an further improved brazability was achieved.

In contrast, in comparative examples, that is, Nos. 20 through 28, where the chemical compositions were out of the appropriate range, it was not possible to achieve both good brazability and good corrosion resistance at the same time.

More specifically, in the comparative example No. 20 (steel code B1), since the Si content was more than the upper limit of the present invention, good brazability was not achieved.

In addition, in the comparative example No. 21 (steel code B2), since the Mn content was more than the upper limit of the present invention, good brazability was not achieved.

In addition, in the comparative example No. 22 (steel code B3), since the Ni content was less than the lower limit of the present invention, good brazability was not achieved.

In addition, in the comparative example No. 23 (steel code B4), since the Al content was more than the upper limit of the present invention, good brazability was not achieved.

In addition, in the comparative example No. 24 (steel code B5), since the Ti content was more than the upper limit of the present invention, good brazability was not achieved.

In addition, in the comparative example No. 25 (steel code B6), since (4Ni - (Si + Mn)) (value obtained by subtracting the Si content and the Mn content from the Ni content multiplied by 4) was less than the lower limit of the present invention, good brazability was not achieved.

In addition, in the comparative example No. 26 (steel code B7), since the Cr Content was less than the lower limit of the present invention, good corrosion resistance was not achieved.

In addition, in the comparative example No. 27 (steel code B8), since the Cr Content was more than the upper limit of the present invention, good brazability was not achieved.

In addition, in the comparative example No. 28 (steel code B9), since the Cu Content was less than the lower limit of the present invention, good corrosion resistance was not achieved.

Industrial Applicability

According to the present invention, it is possible to obtain ferritic stainless steel which can suitably be used as a material for an exhaust gas recirculation device such as a heat exchanger in a heat collector and an EGR cooler formed by using a brazing method, which has a significant effect on the industry.

## Claims

1. Ferritic stainless steel having a chemical composition containing, by mass%,
   C: 0.003% to 0.020%,
   Si: 0.05% to 0.60%,
   Mn: 0.05% to 0.30%,
   P: 0.040% or less,
   S: 0.020% or less,
   Cr: 17.0% to 22.0%,
   Ni: 0.20% to 0.80%,
   Cu: 0.30% to 0.80%,
   Mo: 0.01% to 0.10%,
   Al: 0.001% to 0.015%,
   Nb: 0.25% to 0.60%, and
   N: 0.020% or less,
   the balance being Fe and inevitable impurities, wherein expression (1) below is satisfied:

$$4Ni - (Si + Mn) \geq 0.00\%, \quad \cdots (1)$$

   where, in expression (1), each of Ni, Si, and Mn denotes a content (mass%) of a corresponding element.

2. The ferritic stainless steel according to Claim 1, wherein the chemical composition further contains, by mass%, one or both selected from
   Co: 0.01% to 0.50%, and
   W: 0.01% to 0.50%.

3. The ferritic stainless steel according to Claim 1 or 2, wherein the chemical composition further contains, by mass%, one, two, or more selected from
   Ti: 0.01% to 0.10%,
   V: 0.01% to 0.20%,
   Zr: 0.01% to 0.10%,

Mg: 0.0005% to 0.0050%,
Ca: 0.0003% to 0.0030%,
B: 0.0003% to 0.0030%,
REM (rare earth metal): 0.001% to 0.100%,
Sn: 0.001% to 0.100%, and
Sb: 0.001% to 0.100%.

4. The ferritic stainless steel according to any one of Claims 1 to 3, the steel being suitable for a heat collector or an exhaust gas recirculation cooler having at least one joint part formed by using a brazing method.

# EP 3 733 910 A1

## INTERNATIONAL SEARCH REPORT

International application No.

PCT/JP2019/001665

### A. CLASSIFICATION OF SUBJECT MATTER

Int. Cl. C22C38/00(2006.01)i, C22C38/48(2006.01)i, C22C38/60(2006.01)i, C21D9/46(2006.01)n

According to International Patent Classification (IPC) or to both national classification and IPC

### B. FIELDS SEARCHED

Minimum documentation searched (classification system followed by classification symbols)

Int. Cl. C22C38/00, C22C38/48, C22C38/60, C21D9/46

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-12070 A (JFE STEEL CORP.) 22 January 2009, claims, paragraph [0040], table 1, steel number A (Family: none) | 1-3 |
| Y | | 4 |
| Y | WO 2016/068291 A1 (NIPPON STEEL & SUMIKIN STAINLESS STEEL CORP.) 06 May 2016, paragraphs [0002]-[0009] & US 2017/0275723 A1, paragraphs [0003]-[0010] & EP 3214198 A1 & KR 10-2017-0037663 A & CN 106715741 A & MX 2017002911 A | 4 |
| A | WO 2014/157231 A1 (NIPPON STEEL & SUMIKIN STAINLESS STEEL CORP.) 02 October 2014 & KR 10-2015-0000893 A | 1-4 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.03.2019 | 12.03.2019 |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**15**

**INTERNATIONAL SEARCH REPORT**

International application No.

PCT/JP2019/001665

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-216591 A (NISSHIN STEEL CO., LTD.) 15 August 1995 (Family: none) | 1-4 |
| P, X | WO 2018/043309 A1 (JFE STEEL CORP.) 08 March 2018, claims, examples & TW 201812050 A | 1-4 |

Form PCT/ISA/210 (continuation of second sheet) (January 2015)

**EP 3 733 910 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010121208 A
- JP 2009174040 A
- JP 2010285683 A